# EUROPÄISCHE PATENTSCHRIFT

(11) **EP 1 387 942 B1**
(45) Veröffentlichungstag und Bekanntmachung des Hinweises auf die Patenterteilung: **08.03.2006**
(21) Anmeldenummer: 02740281.7
(22) Anmeldetag: 23.04.2002
(51) Int. Cl.: F02M 51/06, F02M 55/04

(54) **BRENNSTOFFEINSPRITZVENTIL MIT DÄMPFUNGSELEMENT**
FUEL INJECTION VALVE WITH A DAMPING ELEMENT
SOUPAPE D'INJECTION DE CARBURANT COMPRENANT UN ELEMENT D'AMORTISSEMENT

(30) Priorität: 09.05.2001 DE 10122353
(43) Veröffentlichungstag der Anmeldung: 11.02.2004
(73) Patentinhaber: ROBERT BOSCH GMBH, 70442 Stuttgart (DE)
(72) Erfinder: REITER, Ferdinand, 71706 Markgröningen (DE); FISCHER, Ulrich, 71254 Ditzingen (DE); THÖMMES, Franz, 74321 Bietigheim-Bissingen (DE)
(74) Vertreter: Körfer, Thomas
(86) Internationale Anmeldenummer: PCT/DE2002/001476
(87) Internationale Veröffentlichungsnummer: WO 2002/090757

(56) Entgegenhaltungen:
- EP-A- 0 290 787
- EP-A- 0 780 569
- EP-A- 0 911 512
- WO-A-02/10583
- DE-A- 1 450 446
- DE-A- 2 461 309
- DE-A- 19 826 011
- FR-A- 1 536 140

## Beschreibung

### Stand der Technik

Die Erfindung geht aus von einem Brennstoffeinspritzventil nach der Gattung des Hauptanspruchs.

Beispielsweise ist aus der DE 196 26 576 A1 ein elektromagnetisch betätigbares Brennstoffeinspritzventil bekannt, bei welchem zur elektromagnetischen Betätigung ein Anker mit einer elektrisch erregbaren Magnetspule zusammenwirkt und der Hub des Ankers über eine Ventilnadel auf einen Ventilschließkörper übertragen wird. Der Ventilschließkörper wirkt mit einer Ventilsitzfläche zu einem Dichtsitz zusammen. Im Anker sind mehrere Brennstoffkanäle vorgesehen. Die Rückstellung des Ankers erfolgt mit einer Rückstellfeder.

Nachteilig bei dem aus der DE 196 26 576 A1 bekannten Brennstoffeinspritzventil ist insbesondere, daß Druckpulsationen, die überwiegend durch das zyklische Öffnen und Schließen des Brennstoffeinspritzventils hervorgerufen werden, ungedämpft auf andere Teile des Brennstoffeinspritzsystems, beispielsweise auf die Brennstoffverteilerleitung, übertragen werden und dadurch Resonanzen hervorrufen, die zu störender Geräuschemission beim Betrieb des Brennstoffeinspritzventils führen.

Durch Resonanzen besteht auch die Möglichkeit, daß sich bedingt durch Vibrationen Verbindungen zwischen Bauteilen lösen, was zu Fehlfunktionen der Brennstoffeinspritzanlage oder sogar der Brennkraftmaschine führen kann, was zu einer hohen Beeinträchtigung der Betriebssicherheit führt.

Aus der EP 0 780 569 A1 ist ein Brennstoffeinspritzventil bekannt, bei dem eine mit Brennstoff durchflossene Ausnehmung vorgesehen ist. Ein in der Ausnehmung vorgesehenes Dämpfungselement weist ein aus einer Feder gebildetes elastisches Element auf, das ein Ventilelement mit einer Federkraft beaufschlagt, um eine Öffnung zu verschließen. Die Feder ist dabei am ablaufseitigen Ende des Dämpfungselements vorgesehen.

### Vorteile der Erfindung

Das erfindungsgemäße Brennstoffeinspritzventil mit den kennzeichnenden Merkmalen des Hauptanspruchs hat demgegenüber den Vorteil, daß zumindest ein in einer Ausnehmung des Brennstoffeinspritzventils angeordnetes Dämpfungselement die durch die Ventilnadelbewegung verursachten Druckpulsationen so dämpft, daß Resonanzen in der Brennstoffverteilerleitung unterbleiben und die Geräuschemission gesenkt wird.

Durch die in den Unteransprüchen aufgeführten Maßnahmen sind vorteilhafte Weiterentwicklungen des im Hauptanspruch angegebenen Brennstoffeinspritzventils möglich.

Bei Brennstoffeinspritzventilen mit längerer Baulänge können vorteilhafterweise mehrere Dämpfungselemente verwendet werden, die beispielsweise durch unterschiedliche axiale Längen die Dämpfungseigenschaften verbessern können.

Bei der Verwendung mehrerer Dämpfungselemente kann die Bohrung größer sein, da die Dämpfung durch eine größere Länge des Bauteils verstärkt wird. Dadurch können die Dämpfungselemente auch zulaufseitig des Filterelements angeordnet sein, was eine einfachere Montage bzw. die Möglichkeit des Nachrüstens bereits in Betrieb befindlicher Brennstoffeinspritzventile ermöglicht.

Die Verwendung eines drosselähnlichen Dämpfungselements ist vorteilhaft, da durch eine Ineinanderschachtelung von elastischen Elementen und Einsätzen in dem Dämpfungselement eine sehr effektive Dämpfung durch Unterdrückung der Resonanzen möglich ist.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein erstes Beispiel eines Brennstoffeinspritzventils,
- Fig. 2: einen schematischen Schnitt durch ein zweites Beispiel eines Brennstoffeinspritzventils, und
- Fig. 3: eine ausschnittsweise Schnittdarstellung im Bereich III in Fig. 2 eines Ausführungsbeispiels eines erfindungsgemäß ausgestalteten Brennstoffeinspritzventils.

### Beschreibung der Ausführungsbeispiele

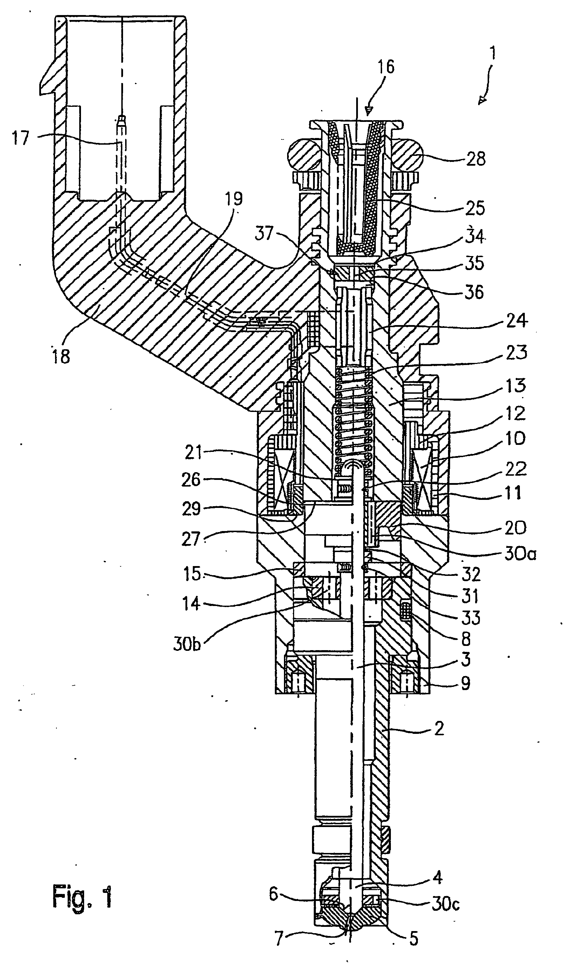

Fig. 1 zeigt in einer auszugsweisen Schnittdarstellung ein erstes Beispiel eines Brennstoffeinspritzventils 1. Das Brennstoffeinspritzventil 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht in Wirkverbindung mit einem Ventilschließkörper 4, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt.

Der Düsenkörper 2 ist durch eine Dichtung 8 gegen einen Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird.

Abströmseitig des Ankers 20 ist ein zweiter Flansch 31 angeordnet, der als unterer Ankeranschlag dient. Er ist über eine Schweißnaht 33 kraftschlüssig mit der Ventilnadel 3 verbunden. Zwischen dem Anker 20 und dem zweiten Flansch 31 ist ein elastischer Zwischenring 32 zur Dämpfung von Ankerprellern beim Schließen des Brennstoffeinspritzventils 1 angeordnet.

In der Ventilnadelführung 14, im Anker 20 und am Ventilsitzkörper 5 verlaufen Brennstoffkanäle 30a bis 30c, die den Brennstoff, welcher über eine zentrale Brennstoffzufuhr 16 zugeführt und durch ein Filterelement 25 gefiltert wird, zur Abspritzöffnung 7 leiten. Das Brennstoffeinspritzventil 1 ist durch eine Dichtung 28 gegen eine nicht weiter dargestellte Verteilerleitung abgedichtet.

Im Ruhezustand des Brennstoffeinspritzventils 1 wird der erste Flansch 21 an der Ventilnadel 3 von der Rückstellfeder 23 entgegen seiner Hubrichtung so beaufschlagt, daß der Ventilschließkörper 4 am Ventilsitz 6 in dichtender Anlage gehalten wird. Der Anker 20 liegt auf dem Zwischenring 32 auf, der sich auf dem zweiten Flansch 31 abstützt. Bei Erregung der Magnetspule 10 baut diese ein Magnetfeld auf, welches den Anker 20 entgegen der Federkraft der Rückstellfeder 23 in Hubrichtung bewegt. Dabei nimmt der Anker 20 den ersten Flansch 21, welcher mit der Ventilnadel 3 verschweißt ist, und damit die Ventilnadel 3 ebenfalls in Hubrichtung mit. Der mit der Ventilnadel 3 in Wirkverbindung stehende Ventilschließkörper 4 hebt von der Ventilsitzfläche 6 ab, wodurch der über die Brennstoffkanäle 30a bis 30c zur Abspritzöffnung 7 geführte Brennstoff abgespritzt wird.

Wird der Spulenstrom abgeschaltet, fällt der Anker 20 nach genügendem Abbau des Magnetfeldes durch den Druck der Rückstellfeder 23 auf den ersten Flansch 21 vom Innenpol 13 ab, wodurch sich die Ventilnadel 3 entgegen der Hubrichtung bewegt. Dadurch setzt der Ventilschließkörper 4 auf der Ventilsitzfläche 6 auf, und das Brennstoffeinspritzventil. 1 wird geschlossen. Der Anker 20 setzt auf dem durch den zweiten Flansch 31 gebildeten Ankeranschlag auf.

In einer Ausnehmung 36 des Innenpols 13 ist eine Blende 34, die mit einer Bohrung 35 versehen ist, angeordnet. Die Blende 34 ist dabei zwischen dem Filterelement 25 und der Einstellhülse 24 abströmseitig des Filterelements 25 angeordnet, wodurch Verunreinigungen des das Filterelement 25 und weiterhin die Blende 34 durchströmenden Brennstoffs zurückgehalten werden und die Bohrung 35 der Blende 34 somit nicht verstopft werden kann.

Durch die Blende 34 können die während des Betriebs des Brennstoffeinspritzventils 1 entstehenden Druckpulsationen abgestellt werden, die beispielsweise durch das zyklische Öffnen und Schließen des Brennstoffeinspritzventils 1 hervorgerufen werden und in der Folge durch Resonanzen insbesondere in der nicht weiter dargestellten Verteilerleitung zu Geräuschbeanstandungen führen können. Auch das Lösen von Steckverbindungen zwischen einzelnen Bauteilen durch angeregte Schwingungen kann durch die Dämpfung der Druckpulsationen unterbunden werden.

Die Blende 34 ist im ersten Ausführungsbeispiel als separates Bauteil hergestellt und in die Ausnehmung des Innenpols 13 vorzugsweise eingepreßt. Es ist jedoch auch möglich, die Blende 34 beispielsweise als kombiniertes Bauteil mit der Einstellhülse 24 oder dem Filterelement 25 auszuführen.

Die Bohrung 35 der Blende 34 ist dabei so dimensioniert, daß die Druckpulsationen wirksam gedämpft werden, der Brennstofffluß durch das Brennstoffeinspritzventil 1 dabei aber nicht gedrosselt wird. Je stärker die Dämpfung der Druckpulsationen ausfällt, desto geringer ist die Resonanz in der Brennstoffverteilerleitung und die dadurch hervorgerufene Geräuschemission.

Die Wahl der Materialien für die Fertigung der Blende 34 ist dabei insbesondere von deren Stabilität gegenüber der Lösungsmittelqualität des Brennstoffs bestimmt. Neben Metallen und Metalllegierungen, die durch die Geschmeidigkeit des Materials eine einfache Anbringung der Blende 34 in der Ausnehmung 36 des Innenpols durch Einpressen erlauben, sind auch Federstahlhülsen oder Teflonringe ebenso wie Elastomere und Kombinationen verschiedener Elastomere sowie Kombinationen aus Elastomeren mit Metallen denkbar. Die Elastomere können gewebeverstärkt oder mit Füllstoffen wie Glasfasern, Glaskugeln, Gesteinsmehl oder Metallpulver gefüllt sein.

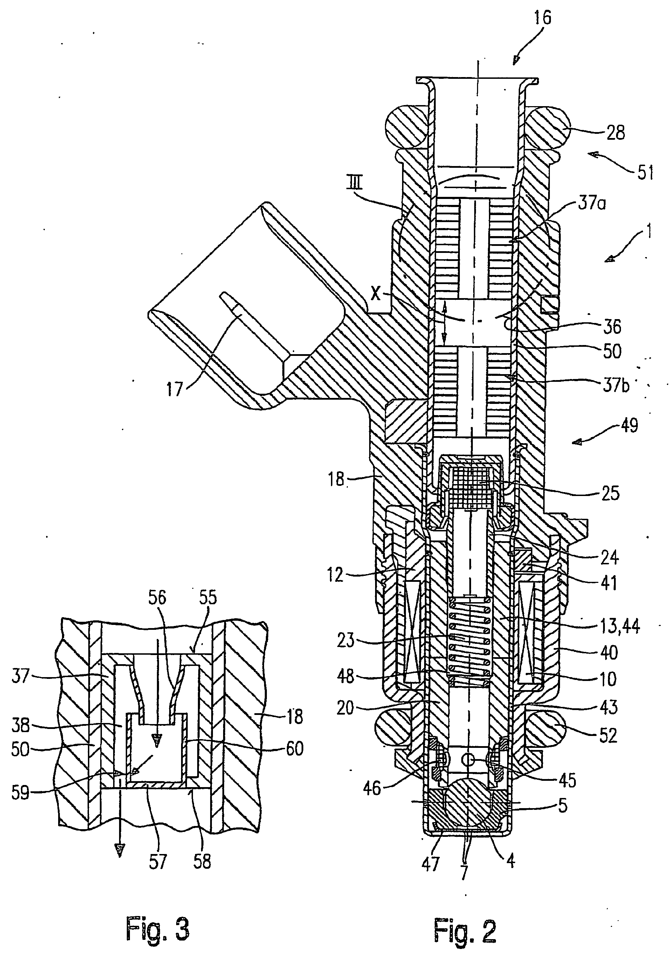

Fig. 2 zeigt in einer ausschnittsweisen, schematisierten Schnittdarstellung einen Längsschnitt durch ein zweites Beispiel eines Brennstoffeinspritzventils 1, welches insbesondere zum Einspritzen von Brennstoff in ein nicht näher dargestelltes Saugrohr einer Brennkraftmaschine geeignet ist. In Fig. 1 und Fig. 2 übereinstimmende Bauteile sind dabei mit übereinstimmenden Bezugszeichen versehen.

Das Brennatoffeinspritzventil 1 umfaßt eine Magnetspule 10, die auf einen Spulenträger 12 gewickelt ist. Der Spulenträger 12 ist in einem Ventilgehäuse 40 gekapselt und durch einen Deckel 41 abgeschlossen.

Der Spulenträger 12 wird von einer Ventilhülse 43 durchgriffen, die rohrförmig ausgestaltet ist und ein darin eingespreiztes oder verschweißtes Stützrohr 44 umfaßt, welches als Innenpol der Magnetspule 10 dient. Als Außenpol der Magnetspule 10 kann beispielsweise das ventilgehäuse 40 dienen. Abströmseitig des Stützrohres 44 ist ein Anker 20 angeordnet, der einstückig mit einer Ventilnadel 3 ausgebildet ist. In der Ventilnadel 3 sind Durchströmöffnungen 45 vorgesehen, die den das Brennstoffeinspritzventil 1 durchströmenden Brennstoff zu einem Dichtsitz leiten.

Im Bereich der Durchströmöffnungen 45 ist ein Ringfilter 46 zur Filterung des Brennstoffs angeordnet. Die Ventilnadel 3 steht vorzugsweise durch Schweißen in Wirkverbindung mit einem im Ausführungsbeispiel kugelförmiger Ventilschließkörper 4, der mit einem Ventilsitzkörper E einen Dichtsitz bildet. Stromabwärts des Dichtsitzes ist in einer Spritzlochscheibe 47 wenigstens eine Abspritzöffnung 7 ausgebildet, aus der der Brennstoff in das nicht weiter dargestellte Saugrohr eingespritzt wird.

Der Anker 20 ist im Ruhezustand des Brennstoffeinspritzventils 1 von einer Rückstellfeder 23 so beaufschlagt, daß das Brennstoffeinspritzventil 1 durch den Andruck des Ventilschließkörpers 4 auf den Ventilsitzkörper 5 geschlossen gehalten wird. Die Rückstellfeder 23 ist in einer Ausnehmung 48 des Ankers 20 bzw. des Stützrohres 44 angeordnet und wird durch eine Einstellhülse 24 auf Vorspannung gebracht. Zulaufseitig der Einstellhülse 24 ist ein topfförmiges Filterelement 25 in die Ventilhülse 43 vorzugsweise eingepreßt. Der Brennstoff, der durch eine zentrale Brennstoffzufuhr 16 zugeleitet wird, durchströmt das Brennstoffeinspritzventil 1 durch die Ausnehmung 48 und die Durchströmöffnungen 45 zum Dichtsitz und zur Abspritzöffnung 7.

In ein zulaufseitiges Ende 49 der Ventilhülse 43 ist ein rohrförmiger, metallischer Hohlkörper 50 eingeschoben und mit der Ventilhülse 43 z. B. im Bereich des Filterelements 25 verschweißt. Zur Montage an einer nicht weiter dargestellten Brennstoffverteilerleitung ist das Brennstoffeinspritzventil 1 an einem zulaufseitigen Ende 51 des metallischen Hohlkörpers 50 mit einer Dichtung 28 versehen. Eine weitere Dichtung 52 dichtet die nicht weiter dargestellte Verbindung zwischen dem Brennstoffeinspritzventil 1 und dem Saugrohr ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die an der Ventilhülse 43 bzw. an dem Hohlkörper 50.angespritzt sein kann.

Wird der Magnetspule 10 über eine nicht weiter dargestellte elektrische Leitung ein elektrischer Strom zugeführt, baut sich ein magnetisches Feld auf, das bei ausreichender Stärke den Anker 20 entgegen der Kraft der Rückstellfeder 23 entgegen der Strömungsrichtung des Brennstoffs in die Magnetspule 10 hineinzieht. Dadurch wird ein zwischen dem Anker 20 und dem Stützrohr 44 ausgebildeter Arbeitsspalt 27 geschlossen. Durch die Bewegung des Ankers 20 wird auch die mit dem Anker 20 einstückig ausgebildete Ventilnadel 3 in Hubrichtung mitgenommen, so daß der Ventilschließkörper 4 vom Ventilsitzkörper 5 abhebt und Brennstoff zur Abspritzöffnung 7 geleitet wird.

Das Brennstoffeinspritzventil 1 wird geschlossen, sobald der die Magnetspule 10 erregende Strom abgeschaltet und das Magnetfeld soweit abgebaut ist, daß die Rückstellfeder 23 den Anker 20 vom Stützrohr 44 abdrückt, wodurch sich die Ventilnadel 3 in Abströmrichtung bewegt und der Ventilschließkörper 4 auf dem Ventilsitzkörper 5 aufsetzt.

In dem metallischen Hohlkörper 50 ist zumindest ein Dämpfungselement 37 angeordnet. Im vorliegenden Ausführungsbeispiel sind zur Erhöhung der Dämpfungseigenschaften zwei Dämpfungselemente 37a und 37b vorgesehen. Die Dämpfungselemente 37a und 37b nehmen die gleiche Funktion wie die in dem in Fig. 1 dargestellten ersten Ausführungsbeispiel beschriebene Blende 34 wahr, indem sie Druckpulsationen, die hauptsächlich durch das Öffnen und Schließen des Brennstoffeinspritzventils 1 und nachfolgende Resonanzen in verschiedenen Teilen des Brennstoffverteilersystems verursacht werden, dämpfen.

Durch eine größere axiale Baulänge der Dämpfungselemente 37a und 37b, die durch die größere Baulänge des Brennstoffeinspritzventils 1 und das damit vorhandene Platzangebot bedingt ist, kann eine Ausnehmung 38 der Dämpfungselemente 37a und 37b größer als die in Fig. 1 beschriebene Bohrung 35 dimensioniert sein, ohne die Dämpfungswirkung abzuschwächen.

Zur Vermeidung von Verwirbelungen in der Brennstoffströmung kann die Form der Dämpfungselemente 37a und 37b variieren. Beispielsweise kann die Ausnehmung 38 einen variablen Durchmesser über die axiale Länge des Dämpfungselements 37a und 37b aufweisen, sie kann im Zuströmbereich angefast sein oder an der Innenwand Strukturen zur Strömungsverbesserung aufweisen. Ebenso kann der axiale Abstand X der Dämpfungselemente 37a und 37b variabel gestaltet werden.

Fig. 3 zeigt in einer auszugsweisen Schnittdarstellung ein drittes Ausführungsbeispiel für ein erfindungsgemäßes Dämpfungselement 37, welches beispielsweise in den metallischen Hohlkörper 50 eines Brennstoffeinspritzveritils 1, der in der Beschreibung zu Fig. 2 näher beschrieben ist, einschiebbar ist.

Das Dämpfungselement 37 weist dabei in seiner Ausnehmung 38 zumindest eine, vorzugsweise mehrere elastische Elemente 56, die mit einem zulaufseitigen Ende 55 des Dämpfungselements 37 verbunden sind, auf. Diese erstrecken sich in einer Strömungsrichtung des Brennstoffs in die Ausnehmung 38 und bis in einen topfförmigen Einsatz 57 hinein, der an einem abströmseitigen Ende 58 des Dämfungselements 37 in der Ausnehmung 38 angeordnet und mit dem Dämpfungselement 37 an mindestens einer Stelle verbunden ist.

Der topfförmige Einsatz 57 ist zum zulaufseitigen Ende 55 des Dämpfungselements 37 offen und weist zumindest eine, vorzugsweise mehrere Durchströmöffnungen 59 in einer Wandung 60 des Einsatzes 57 auf.

Der das Brennstoffeinspritzventil 1 durchströmende Brennstoff tritt durch das zulaufseitige Ende 55 in das Dämfungselement 37 ein und und wird durch eine durch die elastischen Elemente 56 gebildete Verengung der Ausnehmung 38 geringfügig gedrosselt. Die elastischen Elemente 56 werden durch den Brennstoff dabei radial- nach außen gedrückt. Der Brennstoff fließt weiter in den topfförmigen Einsatz 57, der in Zuströmrichtung offen ist. Danach verläßt der Brennstoff zunächst den Einsatz 57 über die Durchströmöffnungen 59 in der Wandung 60 des Einsatzes 57 und schließlich das Dämpfungselement 37. Ein möglicher Weg des Brennstoffs durch das Dämpfungselement 37 ist dabei durch Pfeile angedeutet.

Die durch das in Fig. 3 beschriebene Dämpfungselement 37 erzielte Dämpfung ist sehr effektiv, da durch die Ineinanderschachtelung des Einsatzes 57 in das Dämpfungselement 37 und der elastischen Elemente 56 in den Einsatz 57 sich keine Schwingungen in Richtung der Brennstoffzufuhr 16 fortpflanzen, wodurch die Geräuschemission besonders stark reduziert wird.

Die Erfindung ist nicht auf die dargestellten Ausführungsbeispiele beschränkt und z. B. auch für Brennstoffeinspritzventile 1 für gemischverdichtende, selbstzündende Brennkraftmaschinen anwendbar.

## Patentansprüche

1. Brennstoffeinspritzventil (1) mit einer Magnetspule (10), die mit einem von einer Rückstellfeder (23) beaufschlagten Anker (20) zusammenwirkt, der zusammen mit einer Ventilnadel (3) ein axial bewegliches Ventilteil bildet, wobei an der Ventilnadel (3) ein Ventilschließkörper (4) vorgesehen ist, der mit einem Ventilsitzkörper (5) einen Dichtsitz bildet, wobei in einer vom Brennstoff durchflossenen Ausnehmung (36) des Brennstoffeinspritzventils (1) zumindest ein Dämpfungselement (37) angeordnet ist, das zumindest ein elastisches Element (56) aufweist,
**dadurch gekennzeichnet,**
**dass** das elastische Element (56) an einem zulaufseitigen Ende (55) des Dämpfungselements (37) vorgesehen ist, dass sich das elastische Element (56) in einer Strömungsrichtung des Brennstoffs in eine Ausnehmung (38) des Dämpfungselements (37) erstreckt,
**dass** sich das elastische Element (56) in einen topfförmigen Einsatz (57) erstreckt, der an einem ablaufseitigen Ende (58) des Dämpfungselements (37) angeordnet ist, wobei der Einsatz (57) zum zulaufseitigen Ende (55) des Dämpfungselements (37) offen ist, und
**dass** der topfförmige Einsatz (57) zumindest eine Durchströmöffnung (59) in einer Wandung (60) des Einsatzes (57) aufweist.

2. Brennstoffeinspritzventil nach Anspruch 1,
**dadurch gekennzeichnet,**
**dass** das zumindest eine Dämpfungselement (37) in einem das Brennstoffeinspritzventil (1) zulaufseitig verlängernden metallischen Hohlkörper (50) angeordnet ist.

3. Brennstoffeinspritzventil nach Anspruch 2,
**dadurch gekennzeichnet,**
**dass** zwei Dämpfungselemente (37a, 37b) vorgesehen sind.

4. Brennstoffeinspritzventil nach Anspruch 3,
**dadurch gekennzeichnet,**
**dass** die Dämpfungselemente (37a, 37b) zulaufseitig eines Filterelements (25) angeordnet sind.

5. Brennstoffeinspritzventil nach Anspruch 3 oder 4,
**dadurch gekennzeichnet,**
**dass** die axiale Länge der Dämpfungselemente (37a, 37b) unterschiedlich ist.

6. Brennstoffeinspritzventil nach einem der Ansprüche 3 bis 5,
**dadurch gekennzeichnet,**
**dass** ein axialer Abstand (x) zwischen den Dämpfungselementen (37a, 37b) variabel ist.

7. Brennstoffeinspritzventil nach einem der Ansprüche 1 bis 6,
**dadurch gekennzeichnet,**
**dass** der topfförmige Einsatz (57) mit dem Dämpfungselement (37) verbunden ist.

## Claims

1. Fuel injection valve (1) having a magnet coil (10) which interacts with an armature (20) acted upon by a return spring (23), which armature (20) together with a valve needle (3) forms an axially moveable valve part, a valve closing body (4) being provided on the valve needle (3) and forming a sealing seat with a valve seat body (5), at least one damping element (37), which has at least one elastic element (56), being arranged in a recess (36), through which fuel flows, of the fuel injection valve (1),
**characterized**
**in that** the elastic element (56) is provided at an inlet-side end (55) of the damping element (37),
**in that** the elastic element (56) extends into a recess (38) of the damping element (37) in a flow direction of the fuel,
**in that** the elastic element (56) extends into a pot-shaped insert (57) arranged at an outlet-side end (58) of the damping element (37), the insert (57) being open towards the inlet-side end (55) of the damping element (37), and
**in that** the pot-shaped insert (57) has at least one through-flow opening (59) in a wall (60) of the insert (57).

2. Fuel injection valve according to Claim 1,
**characterized**
**in that** the at least one damping element (37) is arranged in a metallic hollow body (50) which forms an extension of the fuel injection valve (1) on the inlet side.

3. Fuel injection valve according to Claim 2,
**characterized**
**in that** two damping elements (37a, 37b) are provided.

4. Fuel injection valve according to Claim 3,
**characterized**
**in that** the damping elements (37a, 37b) are arranged at the inlet side of a filter element (25).

5. Fuel injection valve according to Claim 3 or 4,
**characterized**
**in that** the damping elements (37a, 37b) are of different axial length.

6. Fuel injection valve according to one of Claims 3 to 5,
**characterized**
**in that** an axial distance (x) between the damping elements (37a, 37b) is variable.

7. Fuel injection valve according to one of Claims 1 to 6,
**characterized**
**in that** the pot-shaped insert (57) is connected to the damping element (37).

## Revendications

1. Injecteur de carburant (1) comprenant un électro-aimant (10) qui coopère avec un induit (20) sollicité par un ressort de rappel (23), qui forme conjointement avec une aiguille de soupape (3) une partie de soupape mobile axialement, un obturateur de soupape (4) prévu au niveau de l'aiguille de soupape (3) et formant un siège étanche avec un corps de siège de soupape (5), et au moins un élément d'amortissement (37) disposé dans un évidement (36) traversé par du carburant de l'injecteur de carburant (1), l'élément d'amortissement présentant au moins un élément élastique (56),
**caractérisé en ce que**
l'élément élastique (56) est prévu au niveau d'une extrémité côté entrée (55) de l'élément d'amortissement (37),
l'élément élastique (56) s'étend dans une direction d'écoulement du carburant dans un évidement (38) de l'élément d'amortissement (37),
l'élément élastique (56) s'étend dans un insert en forme de pot (57) disposé au niveau d'une extrémité côté sortie (58) de l'élément d'amortissement (37), l'insert (57) étant ouvert vers l'extrémité côté entrée (55) de l'élément d'amortissement (37), et
l'insert en forme de pot (57) présente au moins une ouverture de passage (59) pratiquée dans une paroi (60) de l'insert (57).

2. Injecteur de carburant selon la revendication 1,
**caractérisé en ce que**
l'au moins un élément d'amortissement (37) est disposé dans un corps creux métallique (50) prolongeant l'injecteur de carburant (1) côté entrée.

3. Injecteur de carburant selon la revendication 2,
**caractérisé par**
deux éléments d'amortissement (37a, 37b).

4. Injecteur de carburant selon la revendication 3,
**caractérisé en ce que**
les éléments d'amortissement (37a, 37b) sont disposés du côté entrée d'un élément filtrant (25).

5. Injecteur de carburant selon la revendication 3 ou 4,
**caractérisé en ce que**
la longueur axiale des éléments d'amortissement (37a, 37b) est différente.

6. Injecteur de carburant selon l'une des revendications 3 à 5,
**caractérisé en ce qu'**
une distance axiale (x) entre les éléments d'amortissement (37a, 37b) est variable.

7. Injecteur de carburant selon l'une des revendications 1 à 6,
**caractérisé en ce que**
l'insert en forme de pot (57) est relié à l'élément d'amortissement (37).
